# EUROPEAN PATENT APPLICATION

(11) **EP 2 108 837 A2**
(43) Date of publication of application: **14.10.2009**
(21) Application number: 09250493.5
(22) Date of filing: 24.02.2009
(51) Int. Cl.: F03D 11/04

(54) **Composite wind turbine tower**

(30) Priority: 27.02.2008 US 38471
(71) Applicant: General Electric Company, Schenectady, NY 12345 (US)
(72) Inventor: Willey, Lawrence Donald, Simpsonville, South Carolina 29680 (US); Zheng, Danian, Simpsonville, South Carolina 29681 (US); Porta, Agusti, 08295 Sant Vicenc de Caste, Barcelona (ES); Demint, Tom, Seattle, Washington 98117 (US)
(74) Representative: Bedford, Grant Richard

(57) **Abstract**

A composite wind turbine tower (104), method for fabricating a composite wind tower (104) and an apparatus for forming a composite wind tower (104). The tower (104) includes a first layer (501) and a second layer (701), each having a matrix material and a plurality of reinforcing fibers (401) disposed in the matrix material. The tower (104) further includes a core layer (601) disposed intermediate to the first layer (501) and the second layer (701). The tower (104) is capable of being partially or fully fabricated on-site.

## Description

The present disclosure is directed generally to composite wind turbine tower structures and methods for forming composite wind turbine tower structures.

Recently, wind turbines have received increased attention as environmentally safe and relatively inexpensive alternative energy sources. With this growing interest, considerable efforts have been made to develop wind turbines that are reliable and efficient.

Generally, a wind turbine includes a rotor having multiple blades. The rotor is mounted to a housing or nacelle, which is positioned on top of a truss or tubular tower. Utility grade wind turbines (i.e., wind turbines designed to provide electrical power to a utility grid) can have large rotors (e.g., 30 or more meters in length). In addition, the wind turbines are typically mounted on towers that are at least 60 meters in height. Blades on these rotors transform wind energy into a rotational torque or force that drives one or more generators. As the blades are rotated by the wind, noise is inherently generated.

As power requirements increase, the size of the wind turbine likewise increases. In addition, the volume of steel and the associated manufacturing process equipment becomes undesirably expensive. The cost and time needed of the transportation of large wind turbine towers is very high. Current wind turbine towers require fabrication at remote facilities, where the fabricated components must be transported to the site and assembled.

Current wind turbine towers are typically fabricated from steel sheet metal or similar metal material for fabrication of tubular wind turbine towers. Such materials are heavy and difficult and expensive to process.

What is needed is a wind turbine tower structure that is capable of being partially or fully assembled on location with reduced transportation requirements and providing a lightweight and less expensive tower structure having the ability to scale up to large sizes, as size and power requirements increase.

One aspect of the present disclosure thus includes a composite wind turbine tower having a first layer and a second layer, each having a matrix material and a plurality of reinforcing fibers disposed in the matrix material. The tower further includes a core layer disposed intermediate to the first layer and the second layer. The tower is capable of being partially or fully fabricated on-site.

Another aspect of the present disclosure includes a method for forming a wind turbine tower. The method includes providing a mandrel having a surface. A first layer is formed by arranging a plurality of fibers on the surface and providing a matrix material to the fibers. A core material is applied to the first layer to form a core layer. A second layer is applied on the core layer by arranging a plurality of fibers on at least a portion of the core layer and matrix material is provided to the fibers. The matrix material is cured to form at least a portion of a composite wind turbine tower.

Still another aspect of the present invention includes a composite wind turbine tower forming apparatus having a first mandrel portion and a second mandrel portion coaxially arranged. The first mandrel portion is arranged and disposed within the second mandrel portion and includes a surface. A fiber providing assembly is arranged and disposed to provide reinforcing fiber to the surface. A curing assembly is arranged within one or both of the first mandrel portion or the second mandrel portion. Each of the first mandrel portion and the second mandrel portion includes a variable diameter.

One advantage of the certain aspects of present disclosure is improved damping properties, provided by the layered composite structure, reducing the wind vibration load so the fatigue life of the wind turbine is extended.

Another advantage of the present disclosure is that the tower fabrication process may be conducted on-site. Such on-site production reduces the cost of manufacturing facilities, wherein the fabrication equipment fits in standard trucks and containers reducing the transportation cost.

Various features and advantages of the present invention will be apparent from the following more detailed description of the preferred embodiment, taken in conjunction with the accompanying drawings which illustrate, by way of example, the principles of the invention, and in which:
FIG. 1 is a side view of a wind turbine according to an embodiment of the present disclosure.
FIG. 2 is an elevation front view of a wind turbine according to an embodiment of the present disclosure.
FIG. 3 is an elevation front view of a wind turbine according to an embodiment of the present disclosure.
FIG. 4 shows a schematic view of a fiber arrangement during assembly of a composite material according to an embodiment of the present disclosure.
FIGs. 5-8 show partial cutaway top perspective views of a layered composite during formation according to another embodiment of the present invention.
FIG. 9 shows a partial cutaway top perspective view of a layered composite wind turbine tower according to an embodiment of the present disclosure.
FIG. 10 shows a sectional view in direction 10-10 from FIG. 9 of a layered composite wind turbine tower according to an embodiment of the present disclosure.
FIG. 11 shows a tower forming apparatus according to an embodiment of the present disclosure.
FIG. 12 shows a partial elevation view of a mandrel according to an embodiment of the present disclosure.
FIG. 13 shows a sectional view of a mandrel taken along direction 13-13 of FIG. 12 according to an embodiment of the present disclosure.
FIG. 14 shows a tower forming apparatus according to another embodiment of the present disclosure.
FIG. 15 shows a tower forming apparatus according to another embodiment of the present disclosure.
FIG. 16 shows a partial cutaway elevation view of a mandrel according to another embodiment of the present disclosure.
FIG. 17 shows a tower forming apparatus according to still another embodiment of the present disclosure.
FIG. 18 shows a tower forming system according to still another embodiment of the present disclosure.

Wherever possible, the same reference numbers will be used throughout the drawings to refer to the same or like parts.

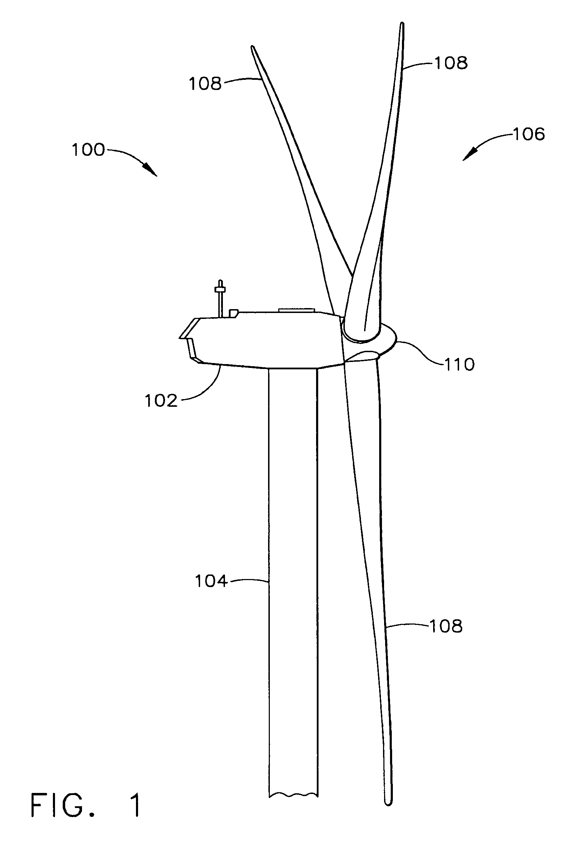

As shown in FIG. 1, a wind turbine 100 generally comprises a nacelle 102 housing a generator (not shown in FIG. 1). Nacelle 102 is a housing mounted atop a tower 104, only a portion of which is shown in FIG. 1. The height of tower 104 is selected based upon factors and conditions known in the art, and may extend to heights up to 60 meters or more. The wind turbine 100 may be installed on any terrain providing access to areas having desirable wind conditions. The terrain may vary greatly and may include, but is not limited to, mountainous terrain or off-shore locations. Wind turbine 100 also comprises a rotor 106 that includes one or more rotor blades 108 attached to a rotating hub 110. Although wind turbine 100 illustrated in FIG. 1 includes three rotor blades 108, there are no specific limits on the number of rotor blades 108 required by the present invention.

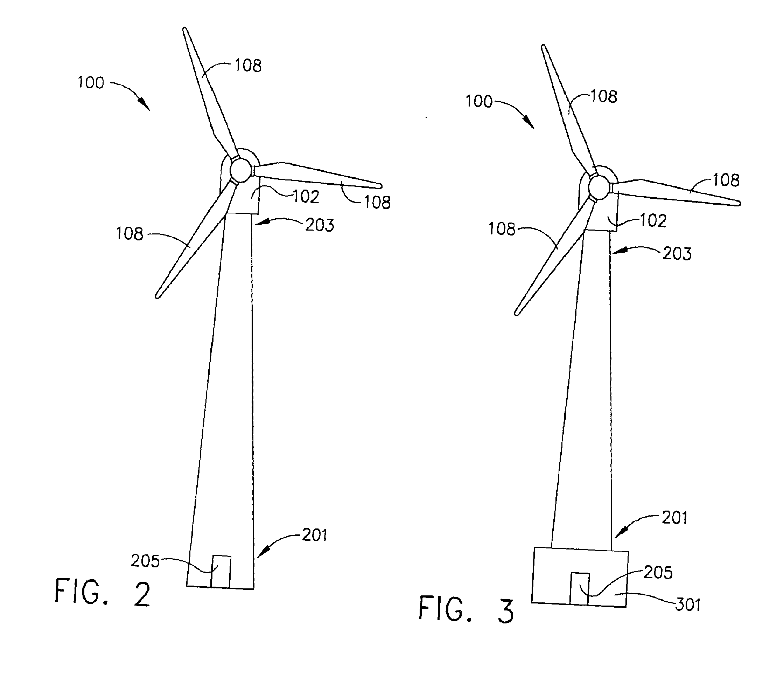

FIG. 2 shows an arrangement of wind turbine 100, including tower 104 made of a composite material, according to one embodiment of the present disclosure. The wind turbine 100 includes components as shown and discussed above with respect to FIG. 1. The tower 104 includes a first diameter at the lower end 201 of the tower 104 and a second diameter at the upper end 203 of the tower 104. The tower 104 may further include an access door 205 to gain access to the tower 104 and the nacelle 102 via stairs or other conveyance method. The first diameter is greater than the second diameter and defines a taper. The taper provides desired strength and operating properties that are desirable for the wind turbine 100. For example, while not so limited, the taper may be configured to provide a combination of bending moment management to provide desired support and stability of the wind turbine 100. Further, the taper may be provided to optimize the bearing and bearing structures present at the base of the nacelle 102 to provide the desired bearing surface, while permitting the passage of personnel and equipment to the nacelle 102 during maintenance and/or inspection. Further the taper may be provided to provide clearance for rotating blades 108 that may be deflected or bent during high wind gusts. Tower 104 may be mounted to a foundation or other structure or may be in the ground to provide structural stability.

FIG. 3 shows an arrangement of wind turbine 100, including tower 104 made of a composite material, according to another embodiment of the present disclosure. The wind turbine includes components as shown and discussed above with respect to FIG. 2. The tower 104 includes a taper including a large diameter from the first end 201 to a smaller diameter at the second end 203. In addition, the tower 104 includes a base 301 that may be fabricated from concrete or other structurally resilient material suitable for supporting the wind turbine 100. The present disclosure is not limited to the configurations shown and may include other configurations of base 301, including alternate designs and geometries.

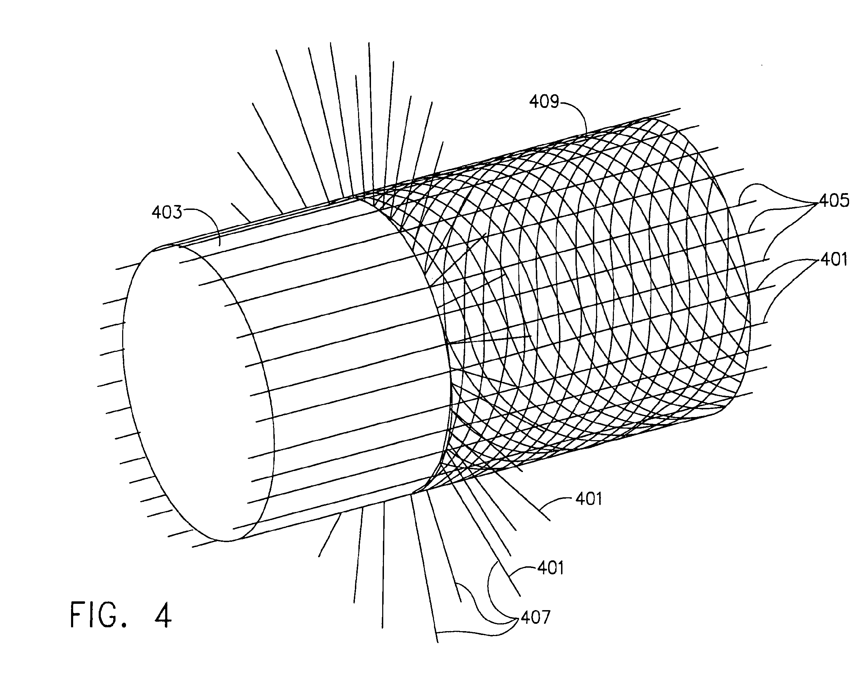

FIG. 4 shows a tower 104 made of a composite material being formed from reinforcing fibers 401 according to an embodiment of the present disclosure. As shown, a mandrel 403 is provided. The mandrel 403 is a cylindrical structure. However, the cross-sectional geometry of the mandrel 403 may include any geometry corresponding to a cross-section for a tower 104. The mandrel 403 may extend for the full length of tower 104 or may correspond to only a partial length and may be moved to provide support for the fibers during fiber application. The fibers 401 include longitudinal fibers 405 and hoop-wise fibers 407. The fibers 401 may be natural or man-made fibers, such as glass fibers, carbon fibers, metal fibers or any other fibers suitable for forming a composite material. The hoop-wise fibers 407 are applied on the longitudinal fibers 405 to form a reinforcing structure. The number of fibers 401 is not limited and may include any number and any density suitable for providing a composite material suitable for supporting the weight and loads of a wind turbine 100. The formed reinforcing structure includes a fiber preform 409 to which resin or other matrix material may be applied and cured. Suitable matrix materials include, but are not limited to, polyester, polyvinyl, epoxy or any other matrix suitable for formation of composite material.

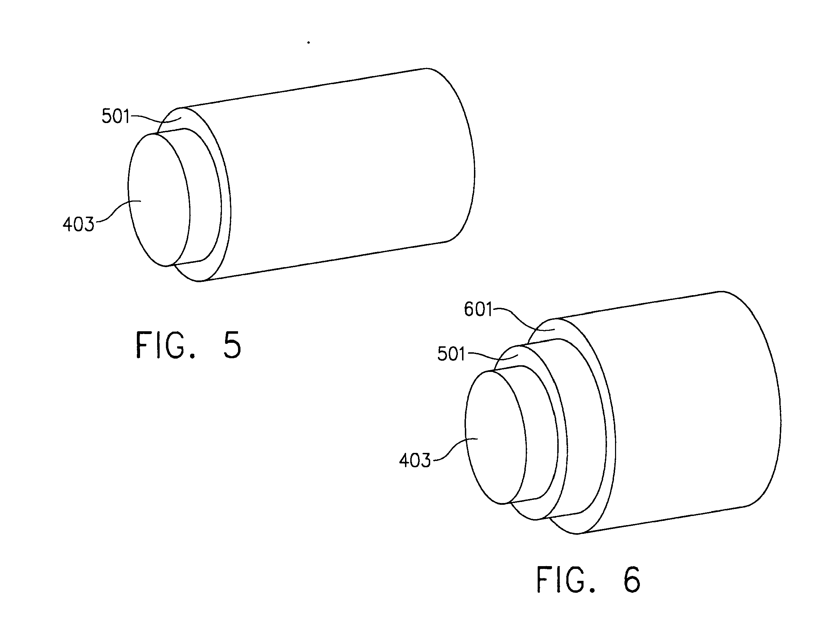

In one embodiment the tower 104 includes a plurality of fiber reinforced layers disposed around a core material 601. FIGs. 5-10 show a tower 104 structure having a layered composite. To form the layered composite tower 104, a mandrel 403 is provided and a first composite layer 501 of reinforcing fibers 401 disposed in a matrix. The reinforcing fibers 401 may be individual fibers wound onto the surface, or may be fiber tapes or fabrics that may be woven or not woven and applied to the surface of mandrel 403. In addition, the reinforcing fibers 401 may be woven or braided and applied to the surface of mandrel 403. In another embodiment, the reinforcing fibers 401 may be a prepreg and/or may include resin or matrix material coating as the reinforcing fibers 401 are applied. The matrix material is added to the reinforcing fibers 401. The matrix material may be cured by infrared radiation, ultraviolet radiation, heat or other curing method. In another embodiment, the matrix material may be permitted to remain on the surface to receive additional layers. As shown in FIG. 6, a core material 601 is applied to the first composite layer 501. The core material 601 may include, but is not limited to, concrete, foam (e.g., polyurethane foam) or other material suitable for forming intermediate layer between reinforced composite layers. The core material 601 is preferably a material that is lightweight and low cost and provide strength and shear resistance to the layered composite. In addition, the core material 601 preferably provides desirable load bearing characteristics and controlled wall thickness for the tower 104. The core material 601 may be applied to the surface using any suitable application technique, including painting, spraying, applying or molding the core material 601 onto the surface.

After the core material 601 is applied, a second composite layer 701 is applied to the core material 601. The second composite layer 701 includes reinforcing fibers 401 and may be the same or a different fiber configuration as the first composite layer 501. The second composite layer 701 is further provided with resin or matrix material using the same matrix material application processes as described above with respect to the first composite layer 501.

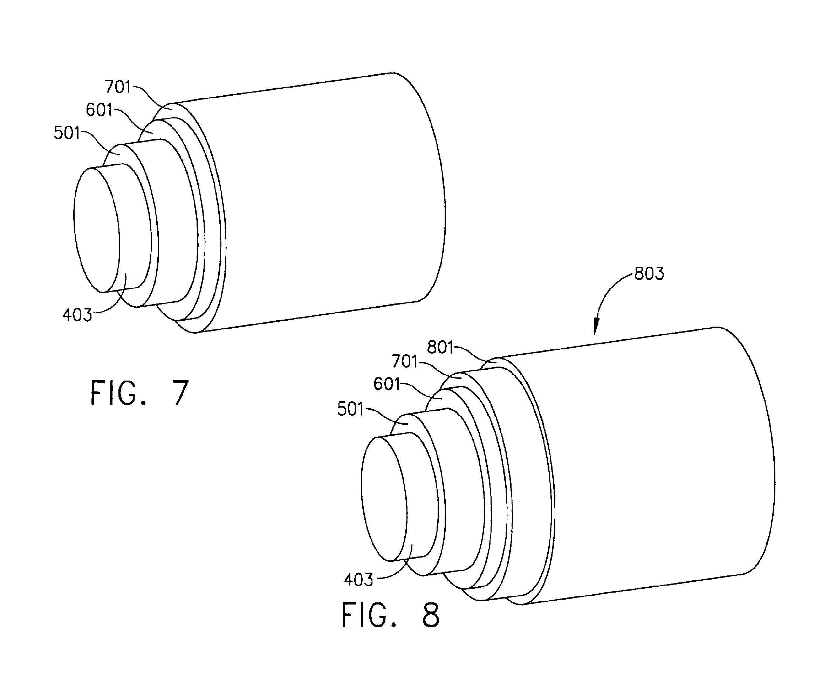

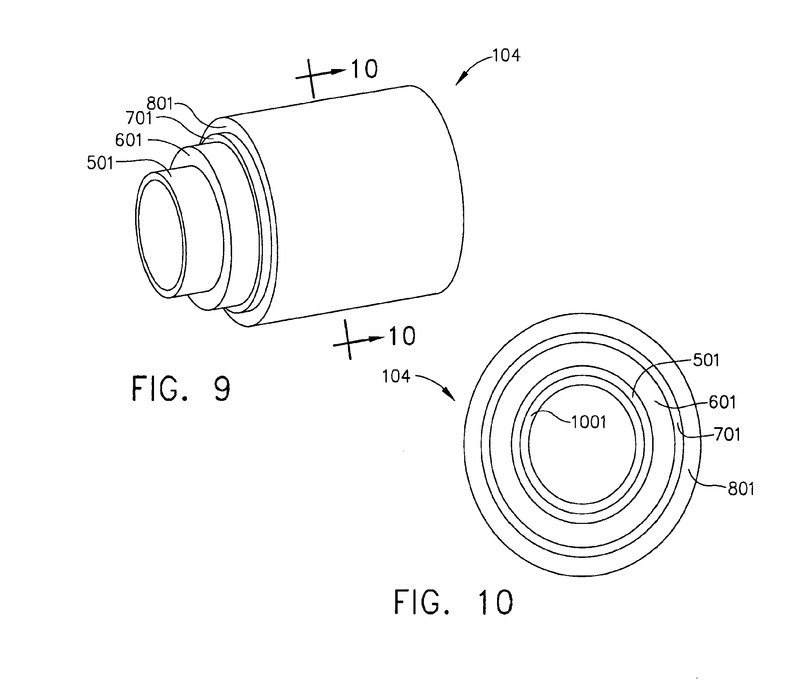

As shown in FIG. 8, the second composite layer 701 may be painted or coated with an outer layer 801 to provide environmental or other protection to the tower 104. In one embodiment of the present disclosure, the layered composite is placed within a vacuum bag 803 or other vacuum arrangement such as VARTM and is heated under vacuum according to known composite fabrication techniques to distribute and cure the matrix material. As shown in FIG. 9, the resultant layered composite is removed from mandrel 403 and an interior layer 1001 may be provided to the interior surface of the first composite layer 501. The interior layer 1001 may be formed in the same manner as the outer layer 801.

FIG. 10 shows a cross-section of the tower 104 including the interior layer 1001, the first composite layer 501, a core material 601 disposed intermediate to the first composite layer 501 and the second composite layer 701 and an outer layer 801. The layered composite improve strength by face shearing, reduces weight and cost, and provides improved damping property of the sandwich fiber composite which will reduce the wind vibration load so the fatigue life of the turbine mechanical system could improve. In another embodiment, the core material 601 may include reinforcing structures, such as steel rebar, or other reinforcing materials to provide additional strength.

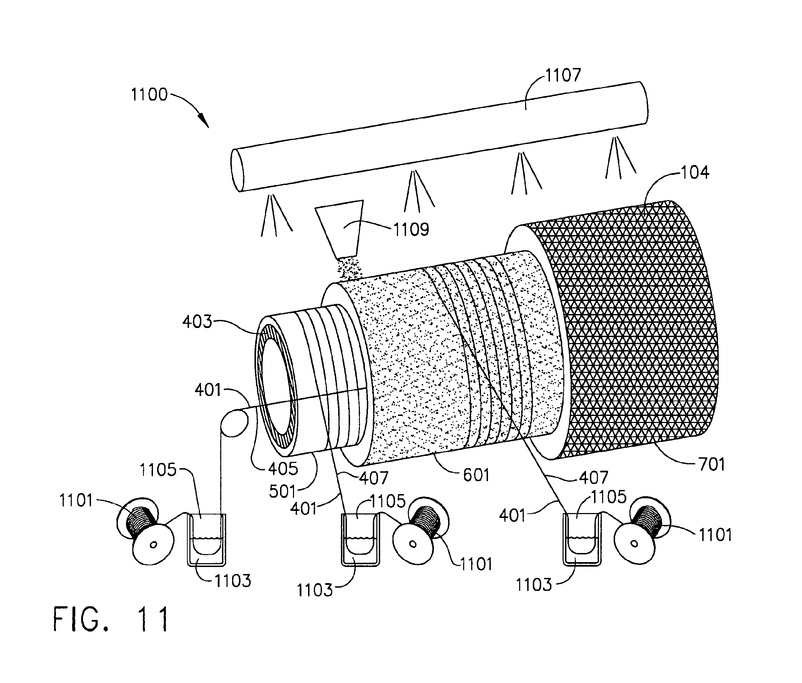

FIG. 11 shows a tower forming apparatus 1100 for forming a layered composite tower 104. As shown in FIG. 11, the apparatus 1100 includes a plurality of fiber bobbins 1101 arranged along the length of the composite tower 104 being formed. Although only examples of representative bobbins 1101 and fibers 401 are shown, additional bobbins 1101 and fibers 401 that are not shown are arranged circumferentially about the tower 104 being formed. For example, the fiber arrangement of first layer 501, which is applied to the mandrel 403 may include a fiber arrangement, such as the fiber arrangement show in FIG. 4. The fibers 401 and core material 601 are layered upon mandrel 403 to provide a layered composite tower 104. The apparatus 1100 may include a large number of bobbins 1101 and fibers 401, depending upon the desired fiber density and the completed size of tower 104. The bobbins 1101 provide fibers 401 that are immersed or otherwise coated with matrix material 1103 prior to or subsequent to application to mandrel 403. The application of fibers 401 to mandrel 403 may be by rotation of the mandrel 403 and the tower 104 being formed or may be provided by rotation of the bobbins 1101 or other structures to which the bobbins 1101 may be attached. The longitudinal fibers 405 are provided along the length of the tower 104 being formed. The longitudinal fiber 405 may be provided with matrix material 1103 via matrix material reservoir 1105 and/or may be coated with matrix material 1103 once positioned onto mandrel 403. The longitudinal fibers 405 are positioned adjacent or in close proximity to the mandrel 403. In order to form the first composite layer 501, hoop-wise fibers 407 are applied to the mandrel 403 and to the longitudinal fibers 405. As discussed above, a plurality of hoop-wise fibers 407 are preferably applied circumferentially about mandrel 403. The hoop-wise fibers 407 may be applied in any desired pattern. For example, while not so limited, the hoop-wise fibers 407 may be applied in a single layer, a partial layer or may be applied in a woven or braided complex structure. The method of application of the hoop-wise fibers 407 is a method that provides sufficient fiber architecture to provide the desired mechanical properties of the formed composite. The matrix material 1103 may additionally be applied by spray nozzles, brushes, rollers or manual application, if desired, to provide additional matrix material.

A curing light 1107 is arranged along the length of the tower 104 being formed and provide radiation, such as heat, ultraviolet light, infrared light or other electromagnetic energy capable of facilitating or aiding in curing of the matrix material 1103. The curing light 1107 is not limited to the arrangement shown and may include a plurality of lights or other devices or devices arranged to provide curing. In addition to curing light 1107, a heating device or radiation emitting device may be incorporated into the mandrel 403 to provide additional curing of the matrix material 1103. Further, mandrel 403 is configured to facilitate or aid in curing of the matrix material 1103. For example mandrel 403 may include a heating device or a radiation source (e.g., an infrared lamp or ultraviolet lamp) to facilitate or aid curing of matrix material 1103, particularly within first composite layer 501.

Core material 601 is provided to the first composite layer 501 via a nozzle 1109 or similar device. The application of the core material 601 provides the core material 601. Rotation of the tower 104 via mandrel 403 and/or rotation of the nozzle 1109 provides circumferential application of the core material 601. While the core material 601 may be any suitable core material 601, including material that does not require curing. Core material 601 may be a curable material wherein the curing light 1107 provides heat and/or radiation suitable to facilitate or assist in curing of the core material 601.

As further shown in FIG. 11, a second set of hoop-wise fibers 405 is applied to the core material 601 to form the second composite layer 701. The application of fibers 401 to mandrel 403 may be by rotation of the mandrel 403 and the tower 104 being formed or may be provided by rotation of the bobbins 1101 or other structures to which the bobbins 1101 may be attached. As with the first composite layer 501, the fibers 401 are immersed or otherwise coated with matrix material 1103. As shown, the matrix material 1103 may be provided by immersion in matrix material within matrix material reservoir 1105. Although not shown, additional matrix material 1103 may be provided to the hoop-wise fibers 405. The curing light 1107 provides heat and/or radiation to facilitate and/or assist in the curing of the second composite layer 701. The layered structure of the first composite layer 501, the core material 601, and the second composite layer 701 substantially make up the tower 104. Additional layers (not shown in FIG. 11) may also be added. For example, an outer weathering layer fabricated from a paint or epoxy material may be applied to the second composite layer 701. Further an inner layer including paint or other material may be applied to an inner surface of the first composite layer 701. Additional layers for additional mechanical properties, such as reinforcing layers, or barrier layers may also be provided.

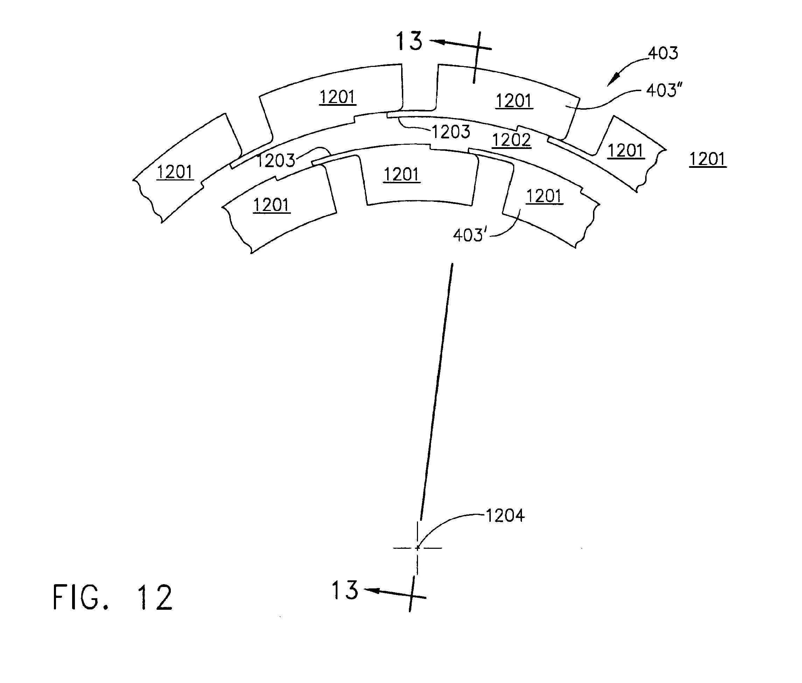

FIG. 12 shows an alternate embodiment of the present disclosure, including a partial front elevation view of a mandrel 403 including a coaxial inner mandrel 403' or first mandrel portion and an outer mandrel 403" or second mandrel portion. As composite formation space 1202 is present between the inner mandrel 403' and the outer mandrel 403" and includes an area in which a composite may be formed. The mandrel 403 is arranged including a plurality of mandrel pads 1201 configured to permit movement with respect to one another. The mandrel pads 1201 include interlocking members 1203 that are slidable and permit movement of the mandrel pads 1201. The interlocking members 1203 further provide sealing and contiguous contact with the composite tower 104 as the tower 104 is formed. As the mandrel pads 1201 move closer together, the smaller the diameter of the mandrel 403 is to the centerline 1204. The centerline 1204 is the center of the cylindrical mandrel 403, including the coaxial inner mandrel 403' and the outer mandrel 403". The inner mandrel 403' and outer mandrel 403" may include structures, as discussed above for mandrel 403, including heating devices or radiation lamps to facilitate or aid in curing of matrix material 1103.

The inner mandrel 403' and outer mandrel 403" may be expanded (i.e., wherein mandrel pads 1201 are urged farther away from one another) or may be contracted (i.e., wherein mandrel pads 1201 are urged closer together) at varied, independent rates. The actuation of the inner mandrel 403' and outer mandrel 403" may be provided by any actuation method known in the art, including, but not limited to, electrical motor configurations, hydraulic motor configurations and/or mechanical assemblies. Such independent actuation of the inner mandrel 403' and outer mandrel 403" permits a pressure to be applied to the composite material within the composite formation space 1202. Such pressure reduces void formation and provides for a composite having desirable mechanical properties. In addition, the independent actuation also permits the mandrel 403 to selectively release the composite and advance to provide a continuous process. For example, upon curing of a portion of the composite in the composite formation space 1202, the inner mandrel 403' may retract (i.e., reduce in diameter) and the outer mandrel 403" may expand (i.e., increase in diameter), wherein the mandrel 403 may be advanced in a direction along the center axis 1204 to form additional composite material. Such continuous processing permits the formation of tall towers 104. In addition, the independent actuation of the inner mandrel 403' and the outer mandrel 403" permits the variation and control of the thickness of the composite formed and the overall diameter of the tower 104. As discussed above with respect to FIGs. 2 and 3, the tapered geometry provides desired mechanical and operational properties to the wind turbine 100.

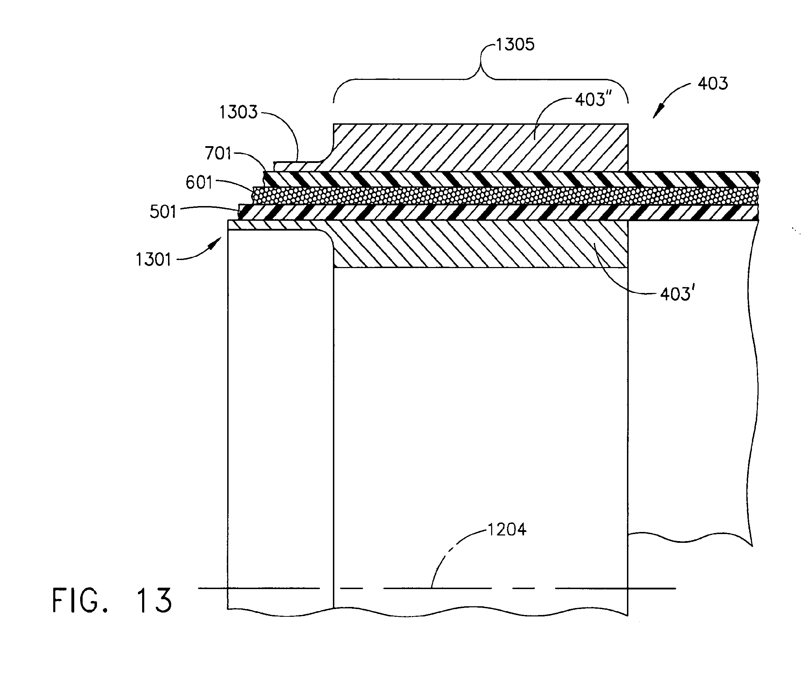

FIG. 13 shows mandrel 403 of FIG. 12 taken in direction 13-13. The mandrel 403 includes the inner mandrel 403' and the outer mandrel 403" as shown and described above with respect to FIG. 12. FIG. 13 further shows a composite tower 104 being formed. As shown, the composite tower includes a first composite layer 501, a core material 601 and a second composite layer 701. The longitudinal fibers 405 and hoop-wise fibers 407 (not shown in FIG. 13) are applied at the composite formation portion 1301 of the mandrel 403 to form the first composite layer 501 and second composite layer 701. A nozzle 1109 or other device (not shown in FIG. 13) may be utilized to provide the core material 601. In addition, the inner mandrel 403' and outer mandrel 403" may be heated or provided with radiation lamps to facilitate or aid in curing of the matrix material 1103 forming the composite. The outer mandrel 403" may optionally include a resin injection port 1303 to provide additional matrix material, if desired. Heat and pressure are preferably applied by the inner mandrel 403' and outer mandrel 403" through the curing zone 1305. The curing zone 1305 may include uniform or non-uniform heating and/or pressure. For example, the curing zone 1305 may include increasing temperature along the length of the composite that is curing to provide a cured product that is substantially free of voids and possesses desirable mechanical properties. The formed composite tower 104 may be painted or coated, as desired, prior to installation in the wind turbine.

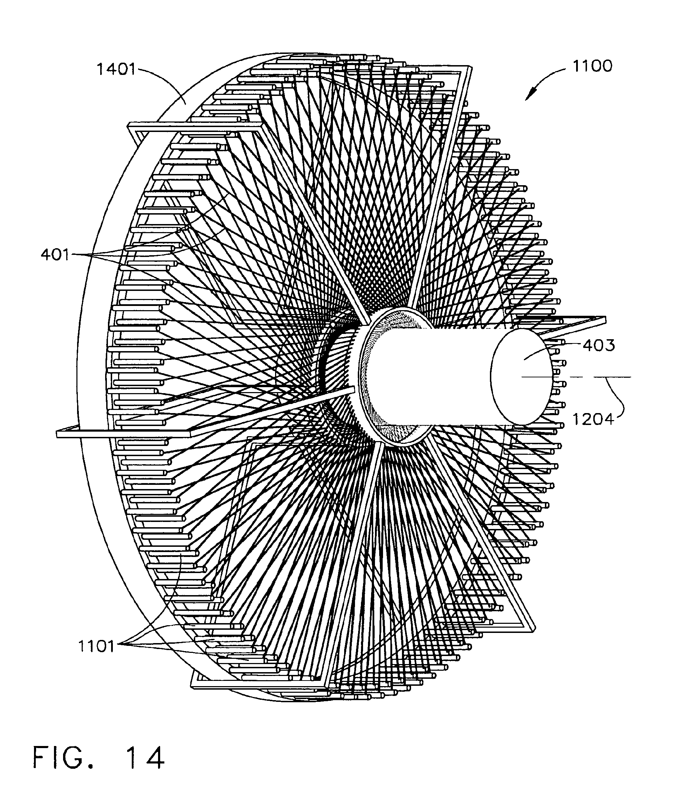

FIG. 14 shows an alternate a tower forming apparatus 1100 using a braiding process according to the present disclosure. As shown, a mandrel 403 is advanced along a center axis 1204 of a fiber providing ring 1401. The fiber providing ring 1401 preferably includes a plurality of bobbins 1101 that provide fibers 401. The fibers 401 may be coated, immersed or otherwise provided with matrix material 1103. Fibers 401 are provided and woven into a triaxial fiber braid onto mandrel 403 making up a first or second composite layer 501,701. Additional materials or additional fiber providing rings 1401 may be provided to form additional layers. The composite layer 501,701 may be cured via a curing lamp 1107 (not shown in FIG.14) or by other heat or radiation providing device.

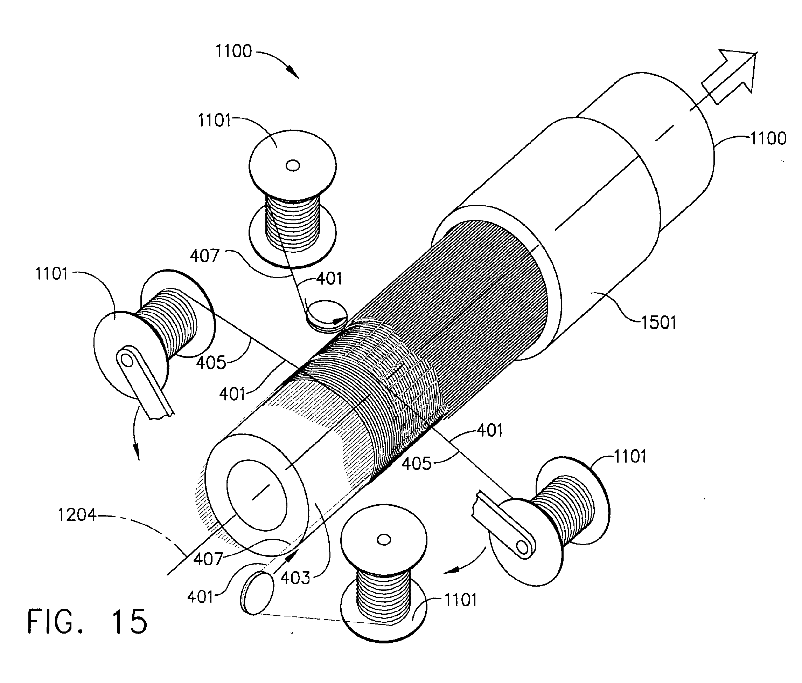

FIG. 15 shows an alternate a tower forming apparatus 1100 according to the present disclosure. The arrangement shown in FIG. 15 is a pultrusion-type process, wherein the fibers 401 are provided to a mandrel 403 and pulled through a heated die 1501 to form the finished composite. As shown, a mandrel 403 is advanced along a center axis 1204 wherein longitudinal fibers 405 and hoop-wise fibers 407 are provided to the mandrel 403 by bobbins 1101. The fiber 401 arrangement may include multiples layers (e.g., core material 601) or may include other weave or braid configurations. Further the fibers 401 may be coated or otherwise provided with matrix material 1103 (not shown in FIG. 15) prior to being pulled through die 1501. The die 1501 preferably applies heat and pressure to the fibers 401 and the matrix material 1103 sufficient to cure the composite and form a composite tower 104.

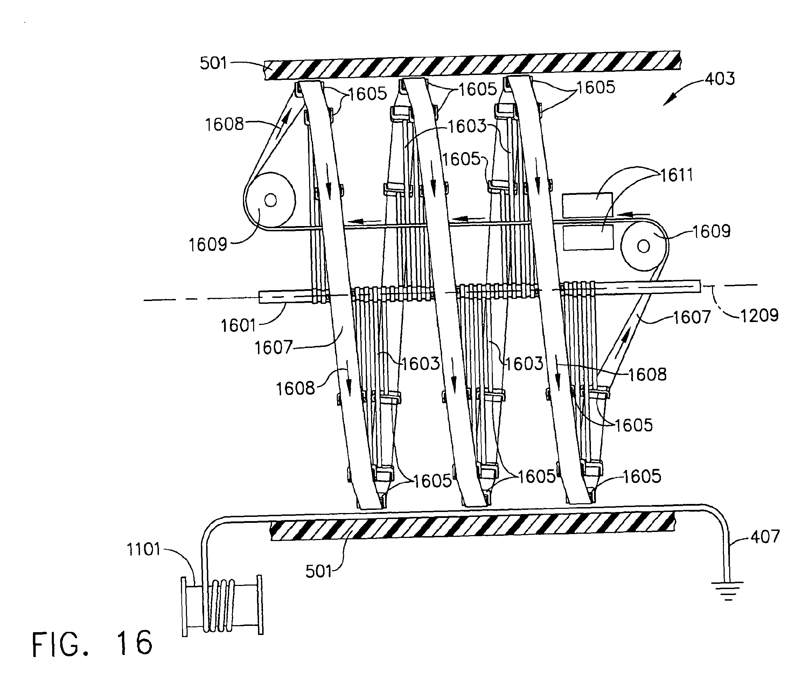

FIG. 16 shows a mandrel 403 according to another embodiment of the present disclosure. In this embodiment, the mandrel 403 includes a heating device that provides heating sufficient to facilitate or aid in curing of matrix material. The mandrel 403 includes a center shaft 1601 oriented along a center axis 1204. A plurality of support arms 1603 extend from the center shaft 1601. A bearing 1605 is arranged at a distal end of the support arms 1603. The bearing 1605 includes a roller, guide and/or any other structure capable of receiving an inductive tape 1607 and permitting the passage of inductive tape 1607 over or through bearing 1605. Although not so limited, the inductive tape 1607 is preferably a metallic tape having a high magnetic permeability, such as iron or iron alloys. The arrangement of support arms 1603 and bearings 1605 direct the inductive tape 1607 in a helical path about a periphery of the mandrel 403. The inductive tape 1607 further exits an end of the mandrel 403 and is driven by a set of drive wheels 1609. The drive wheels 1609 circulate the inductive tape 1607 in direction 1608. During the circulation of the inductive tape 1607, the inductive tape 1607 is directed through an electromagnet 1611 through which alternating current (AC) is provided. The electromagnet 1611 heats the inductive tape 1607 via inductive heating. The heated inductive tape 1607 is circulated along the helical path along the periphery of the mandrel, where the inductive tape 1607 contacts or is provided in close proximity to the first composite layer 501. The heat from the inductive tape 1607 heats and facilitates or aids in curing of the matrix material within the first composite layer 501. As the inductive tape 1607 circulates, the mandrel 403 may be advanced along the center axis 1204 in a direction to heat and form additional composite material. As discussed above, the present invention is not limited to a single composite layer and may include multiple layers, including core material 601 and additional reinforced composite layers. Further, the disclosure is not limited to the arrangement shown in FIG. 16 and may include alternate arrangements, of inductive elements and or paths for the inductive tape 1607. For example, similar arrangements may be utilized to heat the outer mandrel 403" shown in FIGs. 12 and 13 with inductive tape 1607 within or over the mandrel pads 1201.

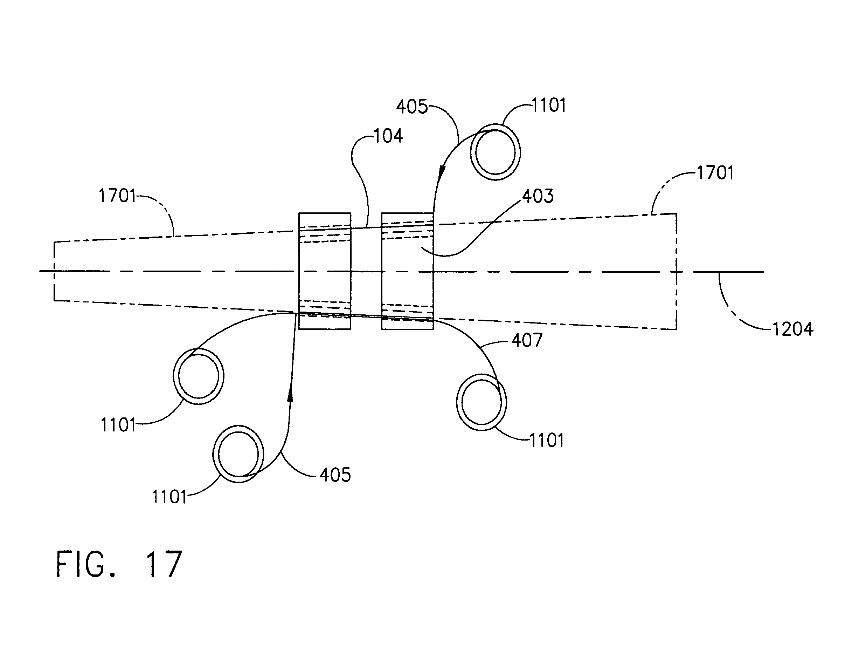

FIG. 17 shows an alternate embodiment of the present disclosure wherein a plurality of mandrels 403 are utilized to simultaneously form tower 104. The mandrels 403 are provided with longitudinal fibers 405 and hoop-wise fibers 407 via bobbins 1101. As discussed above, although FIG. 17 shows only an example of the longitudinal fibers 405 and hoop-wise fibers 407, a plurality of the fibers 405,407 are preferably present circumferentially about the mandrel 403. A sufficient number of fibers 405,407are applied to form the desired composite structure. The mandrels 403 are advanced in opposite directions along the center axis 1204. As shown, the tower 104 formed in present between the mandrels 403 and the tower to be formed 1701 includes a taper. The utilization of a plurality of mandrels 403 permits a reduced requirement for diameter variation of the individual mandrels 403. That is, a larger mandrel 403 may be used for the larger tower to be formed 1701 and a smaller mandrel 403 may be used for the smaller tower to be formed 1701. Other arrangements of mandrels 403 may also be used which facilitate or expedite formation of the tower 104.

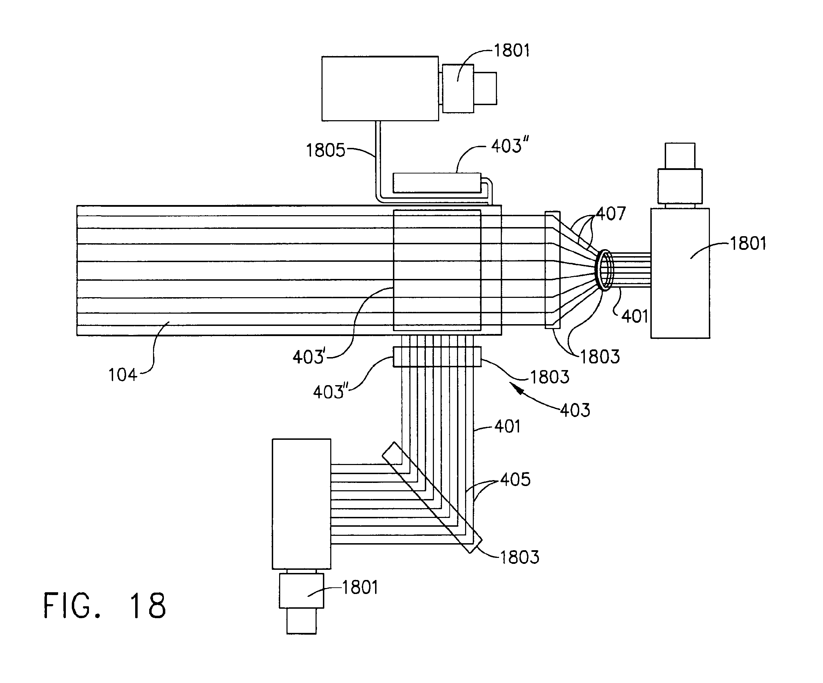

FIG. 18 shows a plan view of an on-site assembly system for a composite tower 104. The system includes an inner mandrel 403' and an outer mandrel 403" arranged in a movable location in which the tower 104 may be formed. As shown, a plurality of supply trucks 1801 may be provided to supply fibers 401 and matrix material. In the arrangement shown, longitudinal fibers 405 are provided by supply truck 1801 and are separated and directed by fiber management structures 1803. Likewise, hoop-wise fibers 407 are provided by supply truck 1801 and are separated and directed by fiber management structures 1803. The longitudinal fibers 405 and hoop-wise fibers 407 are provided to the mandrel 403 and matrix material from matrix material supply 1805 from supply truck 1801 are applied to the fibers 401. Curing lights 1107 or other heating or curing devices (not shown in FIG. 18) are arranged to facilitate curing of the matrix material. As the tower 104 is formed, the system is adjusted to permit additional length of tower 104 to be formed. For example, the mandrel 403 may be advanced or the tower may be pulled or drawn away from the mandrel 403. The present disclosure is not limited to the arrangement shown and may include any arrangement that permits the supply of fibers and matrix material on-site.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:
1. A composite wind turbine tower comprising:
   a first layer and a second layer comprising:
      a matrix material;
      a plurality of reinforcing fibers disposed in the matrix material;
      a core layer disposed intermediate to the first layer and the second layer; and
      wherein the tower is capable of being partially or fully fabricated on-site.
2. The tower of clause 1, wherein the reinforcing fibers are a woven tape.
3. The tower of any preceding clause, wherein the reinforcing fibers are a braid.
4. The tower of any preceding clause, wherein the reinforcing fibers are woven in a triaxial weave.
5. The tower of any preceding clause, wherein the reinforcing fiber comprises a fiber material selected from the group consisting of glass, carbon
6. The tower of any preceding clause, wherein the core material is selected from the group consisting of foam, concrete, reinforcing materials and combinations thereof.
7. The tower of any preceding clause, further comprising an outer coating on the second layer.
8. The tower of any preceding clause, wherein the outer coating is a paint or epoxy coating.
9. A method for forming a wind turbine tower comprising:
   providing a mandrel having a surface;
   forming a first layer by arranging a plurality of fibers on the surface and
   providing a matrix material to the fibers;
   applying a core material to the first layer to form a core layer;
   forming a second layer on the core layer by arranging a plurality of fibers on at least a portion of the core layer and providing a matrix material to the fibers;
   curing the matrix material to form at least a portion of a composite wind turbine tower.
10. The method of clause 9, wherein the method is a continuous process.
11. The method of clause 9 or 10, wherein the continuous process includes releasing the mandrel from the first layer subsequent to curing and directing the mandrel in a direction wherein the process can be repeated.
12. The method of any of clauses 9 to 11, wherein the mandrel includes a first mandrel portion and a second mandrel portion arranged and disposed to provide pressure to one or both of the first layer and second layer.
13. A composite wind turbine tower forming apparatus comprising:
   a first mandrel portion and a second mandrel portion coaxially arranged, the first mandrel portion being arranged and disposed within the second mandrel portion and having a surface;
   a fiber providing assembly arranged and disposed to provide reinforcing fiber to the surface;
   a matrix material injection opening arranged and disposed to permit injection of matrix material between the first mandrel portion and the second mandrel portion;
   a curing assembly arranged within one or both of the first mandrel portion or the second mandrel portion;
   wherein each of the first mandrel portion and the second mandrel portion includes a variable diameter.
14. The apparatus of clause 13, wherein the apparatus further includes a matrix material injection opening arranged and disposed to permit injection of matrix material between the first mandrel portion and the second mandrel portion.
15. The apparatus of clause 13 or 14, wherein the curing assembly includes a radiation lamp.
16 The apparatus of any of clauses 13 to 15, wherein the curing assembly includes a heating device.
17. The apparatus of any of clauses 13 to 16, wherein the heating device includes an inductively heated tape.
18. The apparatus of any of clauses 13 to 17, wherein the first mandrel portion and the second mandrel portion arranged and disposed to provide pressure to one or both of the first layer and second layer.

## Claims

1. A composite wind turbine tower (104) comprising:
a first layer (501) and a second layer (701) comprising:
a matrix material;
a plurality of reinforcing fibers (401) disposed in the matrix material;
a core layer (601) disposed intermediate to the first layer (501) and the second layer (701); and
wherein the tower (104) is capable of being partially or fully fabricated on-site.

2. The tower (104) of claim 1, wherein the reinforcing fibers (401) are a woven tape.

3. The tower (104) of any preceding claim, wherein the reinforcing fibers (401) are a braid.

4. The tower (104) of any preceding claim, wherein the reinforcing fibers (401) are woven in a triaxial weave.

5. The tower (104) of any preceding claim, wherein the reinforcing fiber (401) comprises a fiber material selected from the group consisting of glass, carbon, metal and combinations thereof.

6. The tower (104) of any preceding claim, wherein the core layer (601) is selected from the group consisting of foam, concrete, reinforcing materials and combinations thereof.

7. The tower (104) of any preceding claim, further comprising an outer coating (801) on the second layer (701).

8. The tower (104) of any preceding claim, wherein the outer coating (801) is a paint or epoxy coating.
